# EUROPEAN PATENT APPLICATION

(11) **EP 1 280 370 A2**
(43) Date of publication of application: **29.01.2003**
(21) Application number: 02014538.9
(22) Date of filing: 01.07.2002
(51) Int. Cl.: H04Q 7/38

(54) **System method and transceiver for mobile communications**

(30) Priority: 27.07.2001 GB 0118371
(71) Applicant: MOTOROLA, INC., Schaumburg, IL 60196 (US)
(72) Inventor: Bar-On, David, 76248 Rehovot (IL); Ketter, Meir, 44245 Kfar-Saba (IL); Kramer, David, Ginot-Shomron (IL)
(74) Representative: McCormack, Derek James

(57) **Abstract**

A mobile communications system comprising a plurality of mobile stations, a plurality of base stations each having in operation a radio communications link with mobile stations in a designated service area served by the base station, and a communications controller for controlling the routing of communications between mobile stations via one or more base stations in the system, the system including selection means for selecting in a group call from a first one of the mobile stations to a plurality of selected others of the mobile stations which of the service areas of the system the call will be sent to, wherein the selection means comprises a database of locations of mobile stations in the system and a processor which is operable to access the database and using information from the database relating to the location of mobile stations which are proposed to participate in the group call to select the service areas or areas of the system to which the call from the first mobile station will be routed or will be recommended to be routed so that mobile stations in the group may be contacted in one or more selected service areas.

Also described are a method for operating the system and a mobile radio transceiver for use in the system.

## Description

### FIELD OF THE INVENTION

The present invention relates to a system, method and a transceiver for mobile communications, and in particular to a system and a method for managing group calls in a cellular mobile communications system and a mobile radio transceiver for use in the system and method.

### BACKGROUND OF THE INVENTION

Cellular communication service providers offer a communication service known as a group call, wherein a plurality of users of mobile transceiver units, referred to in the art and herein as mobile stations, register as a group, and a group member can establish a call among all of the group members usually by dialling an identification code number for the group. The present invention is concerned with establishing group calls between member mobile stations which communicate via base stations arranged in a cellular network to give coverage in defined service areas, the communication by and between base stations being controlled by a system controller which may for example be part of an installation known in the art as a switching and management infrastructure.

Conventionally, when a call is initiated to the group, the system controller allocates a traffic channel for the group call in each cell in which there is a group member, and routes the group call to all of these cells.

In a wide area trunking system, such as one operating according to TETRA (Terrestrial Trunked Radio) standards as established by ETSI (the European Telecommunications Standards Institute), a group call established over many cells of the system in the conventional way may be very expensive and may unnecessarily consume valuable system resources. Therefore, a method using Service Areas (SA) for group calls has been adopted. The user that initiates a group call can select that the call will be active only in a certain SA (or certain SAs). The call will also be active in the SA where the initiating user is located. If most of the group members are in one selected SA (which is often the case), the resources required by the group call are reduced.

The user can also choose that the group call will be active in all SAs of the system (wide area call) or will be active only in the user's own area (local area call).

The following problems arise when this known approach is used. Firstly, the user originating the group call has to know the SA(s) in which most of the group memebers are located. Secondly, in systems where the users' mobile stations can roam between different systems, the mobile station cannot be pre-configured with all SAs available in all systems because such a pre-configuration would be very complex.

US Patent No. 4,956,647 issued to McDonald et al., and entitled "Method for Reducing Use of Interzone Audio Resources in a Multizone Communication System", is directed to a method for reducing system resources in a trunked radio communication system. The method is directed at reducing inter-zone communication. It is concerned with making sure that a subscriber is registered in a usable zone having usable resources. Each of a set of communication sites is connected to a zone controller and an audio switch. The zone controller continuously maintains a zone table, which includes the identities of the group call members situated in each zone, at any one time. By employing the information in the zone table, the zone controller can determine the zone, which includes the largest number of group call members. The zone controller determines the zone with the largest number of group call members, to be the preferred zone for that group. Thus, the amount of audio resources required for facilitating communication between the talkgroup members, is reduced by using the preferred zone.

US Patent No. 4,682,367 issued to Childress, et al., and entitled "Mobile Radio Communications System with Join Feature", is directed to a method for placing a group call. A plurality of full duplex mobile radio transceivers are included in a group. An operator of a mobile transceiver initiates a group call by locating an unused communication channel, and transmitting to a repeater transceiver, the predetermined call signalling sequence of the group. The repeater transceiver validates the call signalling sequence, and transmits on its output frequency a version of the call signalling sequence. The other mobile radio transceivers in the group continuously scan the communications channel, and therefore detect the call signalling sequence, which the repeater transceiver transmits. Each mobile radio transceiver in the group decides that the call signalling sequence is directed to it, and therefore locks on to the communication channel on which the call signalling sequence is being transmitted. Then, each mobile radio transceiver begins communicating over the communications channel.

US Patent No. 4,578,815 issued to Persinotti, and entitled "Wide Area Coverage Radio Communication System and Method", is directed to a method to place a wide area coverage call, among a plurality of mobile units. A caller initiates a request for service to a remote central controller. The remote central controller relays the request to a master central controller. The master central controller assigns a channel at each site in the system for the wide area call, and instructs each remote central controller to transmit a channel assignment instruction to each of the called mobile units requested by the caller. Each of the called mobile units in the group tunes to the control channel of the site in the coverage area. When a called mobile unit detects an instruction on the control channel, it tunes to the frequency listed in the instruction, and thus, it receives the message from the caller. It is noted that each of the called mobile units communicates with the caller over a different frequency.

Despite these prior art systems there remains a need for an improved mobile communications system providing wide area coverage in which the effects of the problems described earlier relating to service area selection within the wide area are further reduced or eliminated.

### SUMMARY OF THE PRESENT INVENTION

According to the present invention in a first aspect there is provided a mobile communications system comprising a plurality of mobile stations, a plurality of base stations each having in operation a radio communications link with mobile stations in designated service areas served by one or more of the base stations, and a communications controller for controlling the routing of communications between mobile stations via one or more of the base stations in the system, the system including selection means for selecting in a proposed group call from a first one of the mobile stations to a plurality of selected others of the mobile stations which of the service areas the call will be sent to, wherein the selection means comprises (i) a database of locations of mobile stations in the system and (ii) a processor which is operable to access the database and using information from the database relating to the location of the mobile stations which are proposed to participate in the group call to select the service area or areas of the system to which the call from the first mobile station will be routed or will be recommended to be routed so that mobile stations in the group may be contacted in the one or more selected service areas.

In this specification the expression 'mobile station' (or 'MS') includes portable or mobile radio transceivers and portable or mobile telephones and the like.

The said selection means may be included in the system controller.

The database included in the selection means of the system according to the first aspect of the invention may comprise a register or database in which is stored data relating to the identity and location of MSs of subscribers to the system. Information relating to the location of MSs of subscribers to the system may be obtained by the database in a known manner by use of one or more links within the system to identify the base station(s) with which the MSs are in communication with and if appropriate the distance(s) from such base station(s).

In the system according to the first aspect of the invention the processor may be operable so that it selects the one or more selected service areas and base stations in them according to a statistical analysis of the location of the mobile stations proposed to participate in the group call. The processor may be operable to select a list of the service areas according to the percentage of the mobile stations proposed to participate in the group call which are in the service areas.

In the said system the processor may be operable to select a list of service areas which is within a predefined maximum number of selected service areas.

In the said system the processor may identify the group of mobile stations proposed to participate in the group call according to an identification number provided by the user of one of the mobile stations and sent to the controller in association with a call set up request signal. The processor and/or system controller may be operable to authenticate the identification before allowing the group call set up to proceed.

In the system according to the first aspect of the invention one or more of the mobile stations may conveniently be operable so that when acting as a calling mobile station in a group call the mobile station can direct the system controller to set up the group call in a selected manner. The selected manner may comprise one of a plurality of options presented to the user and may include one or more of:
(i) setting up the group call in selected ones of the service areas, the service areas being selected by a user of the calling mobile station and communicated to the controller from the calling mobile station via one or more of the base stations;
(ii) setting up the group call in selected ones of the service areas, the service areas having been selected by the calling mobile station in the last group call which the calling mobile staion initiated; and
(iii) setting up the group call in selected ones of the service areas, after service area information has been sent to the calling mobile station.

In the system according to the first aspect of the invention the processor and the mobile station requesting set up of a group call, herein referred to as the calling mobile station, may be operable so that service area information sent from the processor to the calling mobile station may be presented to the user of the calling mobile station in audio or visual form. The service area information provided may usefully comprise a plurality of options available to the user of the calling mobile station and/or one or more recommendations to the user for including selected ones of the service areas in the proposed group call.

In the system according to the first aspect of the invention the processor and the mobile stations may be operable so that there are presented to the user of the calling mobile station options and/or one or more recommendations which include one or more of:
(i) user selectable service area(s);
(ii) processor recommended service area(s);
(iii) selected service area(s) to be selected automatically by the processor;
(iv) service area(s)local to the calling mobile station;
(v) wide area service area(s);
(vi) service area(s) which were included in the last group call made by the calling mobile station; and
(vii) the home service area of the calling mobile station.

In the system according to the first aspect of the invention the processor may be operable to transmit to the calling mobile station information about the location of mobile stations in the group. Desirably the calling mobile station is operable to present this information to its user. The information about location desirably includes quantitative information about the service areas in which the mobile stations of the group are located. The quantitative information may comprise one or more of:
(i) the number of the mobile stations of the proposed group located in each of different service areas; and
(ii) the proportion or percentage of the mobile stations of the proposed group in one or more specific service areas.

In the system according to the first aspect of the invention the processor may be operable to use, in the selection of the service areas, information about other factors in addition to mobile station location information. For example, the other information considered may include the system resources available in a given service area. The system resources considered may comprise the number of communication channels allocated to a selected one of the base stations; and/or the bandwidth of communication channels allocated to a selected one of the base stations. Other factors considered may include the intensity of communications traffic to and from a given service area and/or the service toll or charge to access a given service area.

In the system according to the first aspect of the invention the processor may be operable to set up a group call between the mobile stations proposed to participate in the group according to the service area or areas selected by the processor or the service area or areas selected by the user of the calling mobile station after receipt of an instruction signal from the calling mobile station. The calling mobile station may provide an option to allow the service areas to be selected by the user or automatically by the processor. Calls to be automatically based upon service areas selected by the processor are set up by provision of an appropriate signal from the processor to the system controller.

The system according to the first aspect of the invention may for example be a TETRA system, i.e. operable according to TETRA standard procedures, although application of the invention is not limited to use in TETRA systems.

According to the present invention in a second aspect there is provided a method of establishing a group call beteween mobile stations by use of a system according to the first aspect.

According to the present invention in a third aspect there is provided a mobile station which is operable to provide any of the novel mobile station functions described herein using information or recommendations provided by the processor of the selection means.

The present invention beneficially provides a novel way of reducing the amount of system resources required for initiating a group call and for establishing the group call in an efficient manner, which overcomes the disadvantages of the prior art, by employing a group call management procedure controlled by the said selection means which is part of the system controller.

Thus, the invention solves or reduces the effect of the problems described earlier, whilst allowing the system to select and optionally to recommend to the user which SA(s) should be selected according to where the group members are, and even to initiate the group call automatically according to the selection or according to an instruction from the user based on information supplied by the processor of the system. In this way, the user can be assured that most of the group members will join the call, and that minimal system resources (and user changes) will be consumed.

The term "call" herein refers to transmission of communications signals between a calling mobile station and called mobile stations. The information sent in a call when established may comprise audio, visual, audio-visual ( e.g. video conference group call), or text data or other forms of informatiseon transmissible using a modern mobile communications system.

The term 'service area' herein refers to a region which a base station or, more usually a plurality of base stations, cover by communication to the mobile stations in the region. Accordingly, the following terms are used herein in relation to service areas. A service area can either be a 'local' service area, a 'non-local' service area, a 'home' service area or a 'wide' service area.
(i) A local service area is defined in relation to a specific mobile station and is the service area that currently serves that mobile station.
(ii) Service areas other than that currently serving a given service area, which may serve other mobile stations of the group, are defined as 'non-local' service areas.
(iii) A 'home' service area is defined in relation to a specific group of mobile stations. Usually, it is the service area in which most of the mobile stations of the group are usually located. For example, if most of the time the members of a group are located in a given town, then the home service area of this group is is the service area that includes that town. Usually, a home service area in a specified system is predetermined for all groups.
(iv) A 'wide' service area is a term used to describe the unification of the individual service areas of the system, ususally the whole system.

Embodiments of the present invention will now be described by way of example with reference to the accompanying drawings, in which:

### BRIEF DESCRIPTION OF THE ACCOMPANYING DRAWINGS

Figure 1 is a schematic illustration of a communication system, constructed and operating in accordance with an embodiment of the present invention;
Figure 2 is a schematic illustration of a graphical user interface (GUI), for use in a mobile station embodying the present invention;
Figure 3 is a schematic flowsheet illustrating a method for setting up a group call in accordance with an embodiment of the present invention; and
Figure 4 is a schematic flowsheet illustrating a method for performing a selection step in the method illustrated in Figure 3.

### DESCRIPTION OF EMBODIMENTS OF THE INVENTION

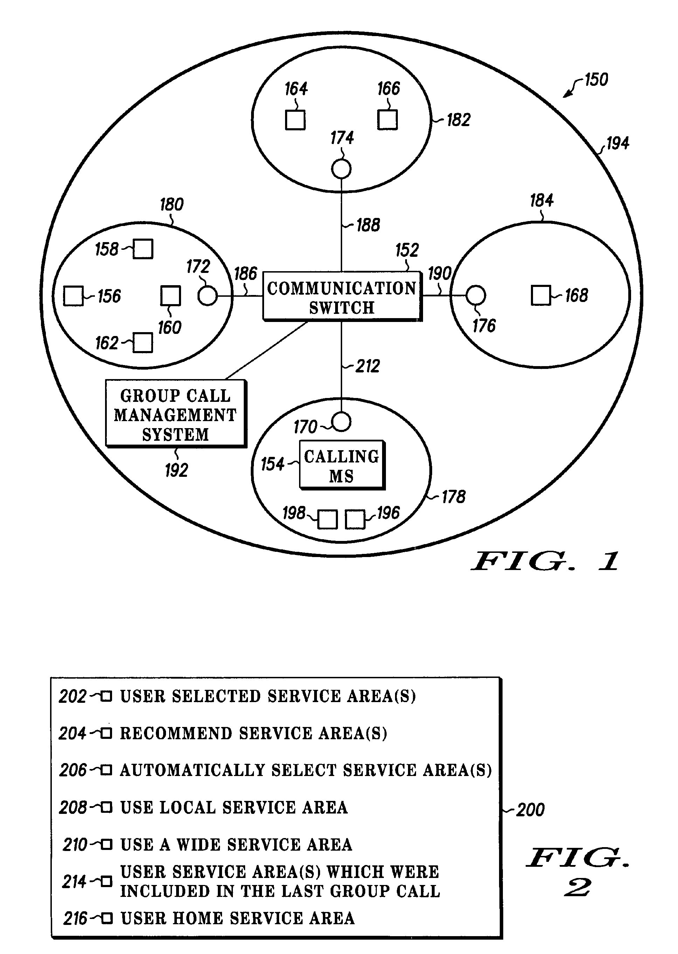

Reference is now made to Figure 1, which is a schematic illustration of a communication system, generally referenced 150, constructed and operating in accordance with an embodiment of the present invention. A communication system 150 includes a communication switch 152, a group call management system 192, a calling MS 154, and a plurality of member MSs 156, 158, 160, 162, 164, 166, 168, 196 and 198. System 150 further includes base stations 170, 172, 174 and 176. Calling MS 154 and member MSs 196 and 198 are located in a service area 178. Member MSs 156, 158, 160 and 162 are located in a service area 180. Member MSs 164 and 166 are located in a service area 182. Member MS 168 is located in a service area 184. Service areas 178, 180, 182 and 184 are located in a wide service area 194.

Group call management system 192 continuously manages the group call, by directing communication switch 152 to connect calling MS 154 to member MSs located in selected service areas. Group call management system 192 selects a service area according to predetermined criteria. Calling MS 154 and member MSs 156, 158, 160, 162, 164, 166, 168, 196 and 198 belong to a group *G*. A group identification (ID) number *N* designates the group *G*. A plurality of indices *N,* each designating a different group G, are stored in a memory unit in the group call management system 192.

Base stations 170, 172, 174 and 176 serve MSs in service areas 178, 180, 182 and 184, respectively. Group call management system 192 is connected to the communication switch 152. Calling MS 154 and member MSs 196 and 198, can connect to communication switch 152 through base station 170. Base station 170 is connected to communication switch 152 by a trunk 212. Member MSs 156, 158, 160, 162 can connect to base station 172, and base station 172 is connected to communication switch 152 by a trunk 186. Member MSs 164 and 166 can connect to base station 174, and base station 174 is connected to communication switch 152 by a trunk 188. Furthermore, member MS 168 can connect to base station 176, and base station 176 is connected to communication switch 152 by a trunk 190.

Each of trunks 212, 186, 188 and 190 provides a plurality of communication links between communication switch 152 and base stations 170, 172, 174 and 176, respectively. Each of the trunks normally comprises a radio interface link. However each trunk can alternatively be a physical connection such as a pair of conducting wires, optical fibre cable, coaxial cable, hybrid fibre coaxial (HFC) cable, and the like.

The user operating calling MS 154 initiates a group call by transmitting a group call set up request signal including the coded group ID number *N* of group *G*, to the communication switch 152. The switch 152 passes the request signal to the management system 192. The management system 192 carries out, either automatically or upon receipt of a further request signal from the user of of calling MS 154, an analyis according to various criteria described below including an analysis of the respective locations of the member MSs in the group and produces a selection of service area(s) which should be included in the group call via the respective base stations in those service areas. A signal representing the resulting selection is delivered to the switch 152. This may be used by the switch 152 to set up the group call automatically in the selected areas or it may be sent back to the calling MS 154 via base station 170 as a recommended selection of service area(s).

It may be possible for the user of calling MS 154 to direct that the call be set up in a particular manner, e.g. by directing the group call management system 192 to set up the group call with no delay in service areas which the user operating calling MS 154 selects. Alternatively, the user of the calling MS 154 can direct the group call management system 192 to set up the group call in the same service areas which were included in the last group call which the user operating calling MS 154 had initiated. Alternatively, the user of calling MS 154 can request group call management system 192 to provide a list of recommended service areas for setting up the group call. Alternatively, the user of calling MS 154 can request that the call be set up automatically in the service areas selected by the management system.

Selection of the service areas for the group call may be carried out as follows. The communication switch 152 transmits the coded group ID number *N* of group *G* to the group call management system 192. The group call management system 192 determines that member MSs 156, 158, 160, 162, 164, 166, 168, 196 and 198, and calling MS 154 belong to group *G*. According to the record stored in the memory unit or database of group call management system 192, the management system 192 determines that a plurality of member MSs, such as member MSs 156, 158, 160, 162 are located in service area 180.

Group call management system 192 detects that a particular number of member MSs are located in a selected service area at a given time. Group call management system 192 detects that member MSs 196 and 198 are located in service area 178, member MSs 164 and 166 are located in service area 182, and that member MS 168 is located in service area 184.

If the user operating calling MS 154, at initiation of the group call, directs group call management system 192 to set up the group call in a selected service area or selected service areas, then group call management system 192 sets up the group call accordingly, and with no delay. If the user operating calling device 154, at initiation of the group call, requests assistance from the group call management system 192 in selecting the service areas for setting up the group call, then the group call management system 192 transmits the respective information to calling MS 154, through communication switch 152. The group call management system 192 can transmit the information to calling MS 154, in a form which can be presentd to the user by visual means such as a graphical user interface (GUI) which is displayed on calling MS 154, by audio means such as audible speech sounds produced by MS 154, or in other known ways.

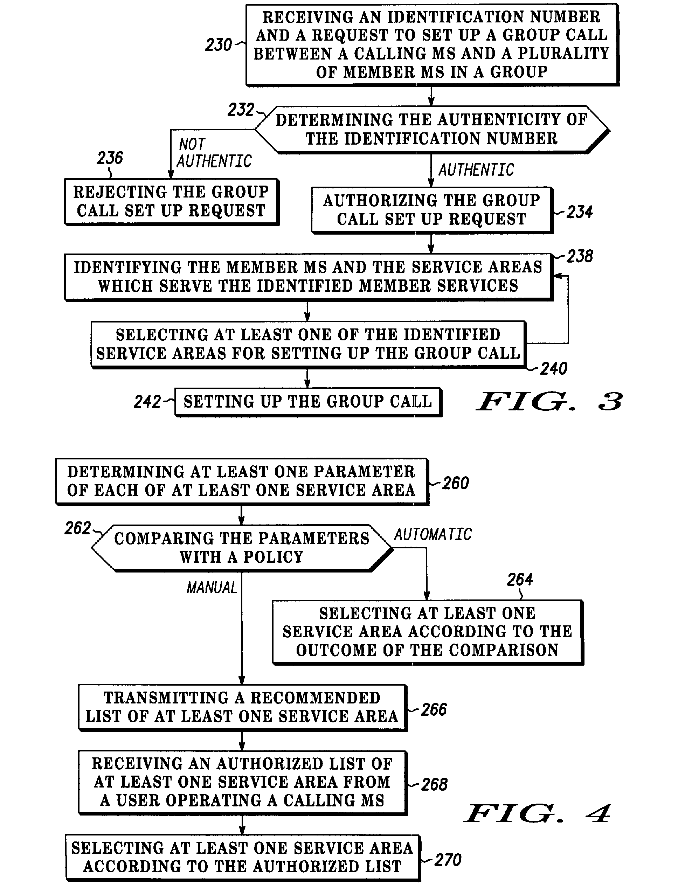

The information which group call management system 192 transmits to calling MS 154 may include a plurality of options. The options may be displayed visually by the GUI. Examples of such options are described later with refernce to Figure 2. Each option represents a method which group call management system 192 can employ, as instructed by the user of caliing MS 154, for selecting at least one of the service areas 178, 180, 182 and 184, or wide area 194 for managing the group call. Thus, the user of calling MS 154 selects one of the options and transmits a signal to the group call management system 192, through base station 170. and communication switch 152, indicating the selected option. Communication switch 152 then receives a signal from the management system 192 to connect at least one of the service areas in which member MSs 156, 158, 160, 162, 164, 166, 168, 196 and 198 are located, to the group call, according to the selected option.

It is noted that group call management system 192 directs communication switch 152 to connect all the member MSs which are located in a selected service area or a plurality of selected service areas, to the group call. For example, if service areas 180 and 184 are selected, then group call management system 192 directs the communication switch 152 to connect member MSs 156, 158, 160, 162, 168, 196 and 198 to the group call via base stations 172 and 176 respectively. It is noted that service area 178, in which the calling MS 154 is located, is included in the group call throughout the group call.

It is furthermore noted that group call management system 192 manages the group call such that member MSs 196 and 198 are connected with calling MS 154 throughout the group call. This occurs, as long as member MSs 196 and 198, and calling MS 154 all remain in service area 178 and remain in communication with the base station 170. which in turn is connected to communication switch 152 by trunk 212.

Group call management system 192 can set up the group call, only in selected service areas and not in every service area which includes the members of group *G*, thus conserving system resources. Group call management system 192 determines which service areas to select, according to at least one criterion. The criteria can be defined and transmitted from MS 154 to the group call management system 192, at the time group *G* is registered with group call management system 192. Alternatively, the group call management system 192 can determine the criterion by employing an artificial intelligence (AI) or processing unit. Furthermore, it is possible for the users operating the member MSs including calling MS 154 to be able to modify the parameters of the criteria to be used in the selection procedure.

Thus, different types of criteria can be defined for the selection procedure to be carried out by the group call management system 192. One criterion for selecting one or more service areas to be included in the group call, is when a predetermined percentage of member MSs of group *G* are located in a given service area. For example, group *G* can set a criterion that a service area should be included in the group call, when at least 20% of the MSs (i.e., 20% of the total number of member MSs including the calling MS 154) are located in the service area. In the example shown in Figure 1, group *G* includes one calling MS 154 and nine member MSs (a total of ten MSs).

Group call management system 192 can thus direct communication switch 152 to include a service area in the group call, only when 20% or more of the devices are located in the service area. Thus, communication switch 152 can be instructed to include service areas 180 and 182 in the group call, where respectively four and two of the member MSs are located therein. Group call management system 192 can according to the 20% selection criterion described above exclude service area 184 from the group call, because only one member MS (less than 20%), is located in service area 184. Thus, trunk 190 is spared in the group call, and valuable system resources are conserved.

Another criterion which may be used by the management system 192 for selecting a service area is the presence of a minimum number of member MSs in the service area. For example, the users of member MSs of group *G* can set a criterion that a service area should be connected to the group call, only when two or more of the member MSs of group *G* are located in the service area. In this case, again group call management system 192 sets up the group call by including service areas 180 and 182, and excluding service area 184.

Alternatively, if a percentage of the member MSs, above a predetermined threshold, are located outside a service area, then group call management system 192 can direct communication switch 152 to connect the group call to a wide service area. For example, if the threshold is set at 20% and member MSs 156, 158, 160 and 162 are located external to service area 180 as shown in Figure 2, then group call management system 192 can direct the communication switch 152 to conduct the group call in the wide service area 194.

A further selection criterion which may be employed by the management system 192 is the selection of the service area in which a selected member MS or selected member MSs, designated as key MSs, are located. For example, group *G* can set a criterion that member MSs 164, 166 and 168 have to participate in every group call which calling device 154 initiates, and other member MSs do not have to join the group call. In this case, the member MSs 164, 166 and 168 form a predetermined member MS list, and this predetermined member MS list may be stored in the memory of group call management system 192. According to this predetermined member MS list, group call management system 192 directs communication switch 152 to include service areas 182 and 184 in the group call, and exclude service area 180. Thus, trunk 186 is spared in the group call, and valuable system resources are conserved.

Another criterion which may be used by the management system 192 in the selection of a given service area in addition to location criteria is the amount of system resources, which the service area consumes. Such system resource can be the number of channels and/or the bandwidth which a base station of the service area employs in order to connect a plurality of member MSs to the group call, and the like. Hence, if the number of channels or the bandwidth thereof, required by the base station to establish the group call exceeds a predetermined threshold, then the service area covered by that base station may be excluded from the group call.

A further criterion which may be used by the management system 192 in the selection of service areas is the toll or service charge properties of the service area. The toll of a call to a service area is often determined according to the physical distance of the service area from communication switch 152 when the link is a wireline, the local time of the service area, the type of link (e.g., twisted pair of wires, or optical fiber), and the like. Thus, if a member device is located in a service area which has a large toll, e.g. above a predetermined amount, then the service area may be excluded from the group call.

Another criterion which may be employed by the management system 192 for selection of service areas is a predetermined maximum number of service areas to be connected to the group call, while setting a priority scheme to determine which service areas will be included within those this number. For example, group *G* can set the maximum number of service areas to two, and further set a priority level of one, two and three for service areas 184, 182 and 180, respectively. In this case, group call management system 192 directs communication switch 152 to include only service areas 184 and 182 in the group call.

Another selection criterion which may be employed by the management system 192 is the load in a given trunk. For example,the maximum load in a trunk may be predetermined to be 80% of the capacity of the trunk. In this case, if communication switch 152 detects that the load in one of trunks 186, 188 and 190 is greater than 80% of capacity of the respective trunk, then the service area served by the trunk is not included in the group call.

It is noted that the criteria which may be used for selecting one or more service areas for a group call, is not restricted to the criteria described herein above, and that other additional criteria can be defined and used. It is furthermore noted that it is possible for the user operating calling MS 154 to specify use of one of the criteria described earlier or a combination thereof,during or before initiation of the group call. Also, it is possible for the user operating calling MS 154 or the user of another member MS to be able to modify the parameters of a selected criterion. For example, it is possible for the user operating calling MS 154 to be able to change the minimum percentage of member MSs required to be in a service area, in order for that service area to be selected. Also, it is possible for the user operating calling MS 154 or the users of other member MSs to be able to modify the definition of group *G*, such as the number of member MSs, the system record of each member MS, and the like. Thus, new member MSs can join group *G*, certain member MSs can leave group *G*, a member MS can change its mobile unit identification number, and the like.

AS noted earlier, the management system 192 can determine the selection of service areas to be included in the group call according to the selected criteria, by employing an artificial intelligence (AI) unit. In this case, the AI unit can retrieve data in respect of call attributes of the user operating calling device 154, or the user of another calling device in group *G*, at predetermined intervals. The AI unit may store this data in a memory unit. The AI unit continuously processes the data and may form new criteria on an ongoing basis, thus learning the preferences of the user operating a calling MS 154. For example, if the user operating calling device 154 frequently selects service area 184, and excludes service areas 180 and 182 from its group calls, then the management system 192 may recommend connection to service area 184, on future group calls which the user operating calling device 154 initiates.

Reference is now made to Figure 2, which is a schematic illustration of a graphical user interface (GUI), generally referenced 200, which may be used on MSs of the system described with reference to Figure 1, especially calling MS 154. GUI 200 is displayed on a screen of a the MS. GUI 200 includes a plurality of check boxes 202, 204, 206, 208, 210 and 214. Check boxes 202, 204 and 206 are allocated to the items "user selected service area(s)", "recommend service area(s)", and "automatically select service area(s)", respectively. Check boxes 208 and 210 are allocated to the items "use local service area", and "use wide service area", respectively. Check box 214 is allocated to "use service area(s) which were included in the last group call". Check box 216 is allocated to "use home service area ".

The user operating the calling MS 154 having GUI 200 can select an option by marking the corresponding check box. Alternatively, GUI 200 can be devoid of any check box, in which case the user may instruct the calling MS 154 by selecting an option in a menu of options by moving a cursor sequentially from one option to another, and confirming the selection. It is noted that GUI 200 can include some but not all of the options shown in Figure 2, or other items, or additional items, as appropriate.

When the user operating calling MS 154 (Figure 1), initiates a group call, he communicates with communication switch 152, in order to enable group call management system 192 to receive an instruction to carry out the service area selection procedure according to the option selected by the user. When the user operating calling MS 154 marks check box 202 ("user selected service areas"), a further GUI (not shown) may be displayed on the calling MS 154. This further GUI lists the service areas that the user operating calling device 154 can select from. The GUI can include information relating to each service area, such as the number of member MSs located in each service area, the percentage of the member MSs in the group which are located in each service area, and the like. The user operating calling MS 154 selects at least one of these service areas on the GUI, and confirms the selection. Calling MS 154 transmits a respective signal including a code associated with each of the selected service areas, to group call management system 192, through communication switch 152. Group call management system 192, then directs communication switch 152 to include the selected service areas in the group call.

When the user operating calling MS 154 marks check box 204 ("recommend service areas"), a further GUI (not shown) may be displayed. This further GUI may provide a list of the service areas recommended by the group call management system 192. In this case, the group call management system 192 recommends at least one service area, according to a set of defined criteria or by employing an artificial intelligence (AI) unit, as described earlier. The user operating calling MS 154, then selects at least one service area from the list provide on the further GUI.

When the user operating calling MS 154 marks check box 206 ("automatically select service areas"), the group call management system 192 is instructed to select the service areas according to the set of predefined criteria, without requesting the user operating calling MS 154 to confirm the selection. Alternatively, calling MS 154 can direct the group call management system 192 to set up the group call with the service areas which group call management system 192 selects, without requiring the user operating calling MS 154, to mark check box 206. When the user operating calling MS 154 marks check box 208 ("use local service area"), the group call management system 192 arranges setting up of the group call only in the service area of calling MS 154 (i.e. service area 178). When the user operating calling MS 154 marks check box 210 ("use wide service area"), the group call management system 192 arranges setting up of the group call with wide service area 194. In this case, service areas 178, 180, 182 and 184 are all included in the group call.

When the user operating calling MS 154 marks check box 214 ("use service areas which were included in the last group call"), group call management system 192 selects the service area or the service areas which were included in the last group call that the user operating calling MS 154 had initiated. The group call management system 192 can include these service areas in the group call, without requesting any further confirmation by calling MS 154.

When the user operating calling MS 154 marks check box 216 ("use home service area"), the group call management system 192 selects the home service area of the group. Group call management system 192 may arrange setting up of the group call in home service area of the group, without requesting any further confirmation by calling MS 154.

Reference is now made to Figure 3, which is a schematic illustration of a method for setting up a group call, operating in accordance with an embodiment of the present invention. In a step 230, an identification number and a request to set up a group call between a calling MS and a plurality of member MSs in a group, is received. With reference to Figure 1, calling MS 154 dials the group identification number *N* of group *G,* and group call management system 192 receives the group identification number via communication switch 152. Thus, the user operating calling MS 154 directs group call management system 192 to set up a group call among the member devices of group *G*.

In a step 232, the authenticity of the identification number is determined. Upon receiving the group identification number *N,* the group call management system 192 checks if the group identification number is authentic. If the group identification number is authentic, then group call management system 192 authorizes the group call to proceed (step 234). If the group identification number is not authentic, then group call management system 192 rejects the request of the user operating calling device 154 to set up the group call (step 236).

In a step 238, the member MSs and the service areas, which serve these member MSs, are identified. With reference to Figure 1, group call management system 192 determines according to the group identification number *N*, that member MSs 156, 158, 160, 162, 164, 166, 168, 196 and 198 belong to the group G. Group call management system 192 further detects that member MSs 156, 158, 160 and 162 are in service area 180, member MSs 164 and 166 are in service area 182, member MS 168 is in service area 184, and that member MSs 196 and 198 are in service area 178.

In a step 240, at least one of the identified service areas for setting up the group call, is selected. With reference to Figure 1, the group call management system 192 determines the parameters of each of service areas 180, 182 and 184 to be used in the selection procedure (e.g. according to one or more of the criteria specified earlier), and selects the service areas accordingly.

After selecting the service areas eligible for the group call, the group call management system 192 instructs the switch 152 to set up the group call (step 242). It is noted that since the member MSs may be moving, the parameters of each service area may change throughout the group call. For this purpose, the group call management system 192 continuously monitors the location of the member MSs relative to base stations 172, 174 and 176, and updates the list of service areas to be included in the group call via a loop-back path 243. For example, if at any time during the group call, member MSs 156 and 158 leave service area 180, and enter service area 182, then the group call management system 192 may direct the communication switch 152 to exclude service area 180 from the group call, and include service area 182. Thereby, trunk 186 is spared during the group call, and valuable system resources are conserved.

Reference is now made to Figure 4, which is a schematic illustration of an example of a method for performing step 240 shown in Figure 3. In a step 260 ( Figure 4) at least one parameter of each of at least one service areas is determined. With reference to Figure 1, the group call management system 192, determines for example the number of member MSs in each of service areas 180, 182 and 184. Alternatively, the group call management system 192 determines the traffic intensity on each of trunks 186, 188 and 190. Then, in a step 262 (Figure 5) the group call management system 192 compares the determined parameters with the predetermined selection criteria policy, e.g. as defined by the user operating the calling 154.

Then, the method either proceeds to an automatic mode (step 264) or to a manual mode (step 266).

In step 264, at least one service area is selected automatically by the management system 192, according to the outcome of the comparison in step 262. For example, with reference to Figure 2, there are two member MSs (196 and 198) in service area 178, four member MSs (156, 158, 160 and 162) in service area 180, two member MSs (164 and 166) in service area 182, and one member MS (168) in service area 184. The traffic intensity on trunk 186 may for example be 80 Erlangs, on trunk 188 it may be 60 Erlangs, and on trunk 190 it may be 50 Erlangs. The weighting in the selection procdure for the number of member MSs in a service area may be 1.5, and the weighting for the traffic intensity on a trunk may be 0.5. Thus, group call management system 192 determines that the weighted number of member MSs in service area 180 is six, the weighted number of member MSs in service area 182 is three, and that the weighted number of member MSs in service area 184 is two. Group call management system 192 further determines that the weighted traffic intensity on trunk 186 is 120 Erlangs, on trunk 188 it is 90 Erlangs, and on trunk 190 it is 75 Erlangs.

With reference to Figure 2, group call management system 192 displays GUI 200 on calling MS 154, and the user operating calling MS 154 marks check-box 206 (automatically select service areas). The previously defined selection policy may for example be that the minimum number of member MSs in a given service area for the service area to be selected is two, and the maximum traffic intensity on a trunk serving a service area is 100 Erlangs. The management system 192 proceeds with the selection using this predefined policy. Therefore, for the examples given above, the group call management system 192 automatically selects service areas 182 and 184, and it does not select service area 180, since the weighted traffic intensity on trunk 186 (120 Erlangs) exceeds the maximum (100 Erlangs) defined according to the policy.

In a step 266, alternative to step 264, the method proceeds in a manual mode, wherein a recommended list of at least one service area is transmitted to the user of calling MS 154. With reference to Figures 1 and 2, group call management system 192 displays GUI 200 on calling MS 154, and the user operating calling MS 154 marks check-box 204 (recommend service areas). A recommended list of service areas (182 and 184) is displayed on calling MS 154. The user operating calling MS 154 selects service area 182, and in a step 268 transmits the selection to the group call management system 192.

In a step 270, at least one service area according to the authorized list, is selected. With reference to Figure 2, group call management system 192 receives a signal representing the list of service areas chosen by the user of calling MS 154 (which in the example above includes only service area 182) from calling MS 154, and directs the communication switch 152 to include service area 182 in the group call.

Although in the above embodiments the communications switch 152 and the management system 192 have been described as separate units these units may in practice be combined in a common switching and management or system controller installation. In any case, important components of the management system 192 are a frequently updated location database or register in which information about the identity and location of subscriber MSs is stored and may be accessed and a processor which is able to carry out the selection of service areas to be included in a group call according to predetermined criteria provided to the processor including, inter alia, criteria relating to the location of MSs proposed to take part in the group call.

## Claims

1. A mobile communications system (150) comprising a plurality of mobile stations, a plurality of base stations (170, 174) each having in operation a radio communications link with mobile stations (154,164) in service areas (178, 182) served by one or more of the base stations, and a communications controller (152) for controlling the routing of communications between mobile stations via one or more of the base stations in the system, **characterised in that** the system includes selection means (192) for selecting in a proposed group call from a first one of the mobile stations (154) to a plurality of selected others of the mobile stations (196, 164) which of the service areas the call will be sent to, wherein the selection means comprises
(i) a database of locations of mobile stations in the system and (ii) a processor which is operable to access the database and using information from the database relating to the location of the mobile stations which are proposed to participate in the group call to select the service area or areas of the system to which the call from the first mobile station will be routed or will be recommended to be routed so that mobile stations in the group may be contacted in the one or more selected service areas.

2. A system according to claim 1 and wherein the processor is operable so that it selects the one or more service areas according to a statistical analysis of the location of the mobile stations proposed to participate in the group call.

3. A system according to claim 2 and wherein the processor is operable to select a list of the service areas according to the percentage of the mobile stations proposed to participate in the group call which are in the service areas.

4. A system according to claim 2 or claim 3 and wherein the processor is operable to select a list of service areas which is within a predefined maximum number of selected service areas.

5. A system according to any one of the preceding claims and wherein said processor is included within the system controller.

6. A system according to any one of the preceding claims and wherein in operation the processor identifies the group of mobile stations proposed to participate in the group call according to an identification number sent in a signal by the first mobile station.

7. A system according to any one of the preceding claims and wherein one or more of the mobile stations are operable so that when acting as a calling mobile station in a group call the mobile station can direct the system controller to to set up the group call in a selected manner.

8. A system according to claim 7 and wherein the said one or more mobile stations are operable so that the user thereof is presented with a plurality of options of ways in which to have the group call set up including one or more options based on recommendations produced by the selection means.

9. A system according to claim 7 or claim 8 and wherein the selected manner of setting up the group call by the controller as directed by the calling mobile station comprises one or more of:
(i) setting up the group call in selected ones of the service areas, the service areas being selected by a user of the calling mobile station and communicated to the processor from the calling mobile station via one or more of the base stations;
(ii) setting up the group call in selected ones of the service areas, the service areas having been selected by the calling mobile station in the last group call which the calling mobile staion initiated; and
(iii) setting up the group call in selected ones of the service areas, after transmitting service area information to the calling mobile station.

10. A system according to claim 9 and wherein the processor and the mobile stations are operable so that the processor sends to the calling mobile station, as service area information, information which may be presented to the user of the calling mobile station in audio or visual form.

11. A system according to claim 9 or claim 10 and wherein the processor and mobile stations are operable so that service area information provided to the calling mobile station comprises a plurality of options available to the user of the calling mobile station and/or one or more recommendations to the user for including selected ones of the service areas in the group call.

12. A system according to claim 11 and wherein the processor and the mobile stations are operable so that there are presented to the user of the calling mobile station options and/or one or more recommendations which include one or more of:
(i) user selectable service area(s);
(ii) processor recommended service area(s);
(iii) selected service area(s) to be selected automatically by the processor;
(iv) service area(s)local to the calling mobile station;
(v) wide area service area(s);
(vi) service area(s) which were included in the last group call made by the calling mobile station; and
(vii) the home service area of the calling mobile station.

13. A system according to any one of claims 9 to 12 and wherein the processor is operable to transmit to the calling mobile station information about the location of mobile stations in the group and the calling mobile station is operable to present the information to the user thereof.

14. A system according to claim 13 and wherein the information about location includes quantitative information about the service areas in which the mobile stations of the group are located.

15. A system according to claim 14 and wherein said quantitative information comprises one or more of:
(i) the number of the mobile stations of the proposed group located in each of different service areas;
(ii) the proportion or percentage of the mobile stations of the proposed group concentrated in one or more specific service areas.

16. A system according to any one of the preceding claims and wherein the processor is operable to select the service area or areas by reference to one or more of the following other factors for a given service area in addition to mobile station location information:
(i) the system resources available to the service area;
(ii) the level of communications traffic being delivered to and from the service area;and
(iii) the service charge required to access the service area.

17. A system according to claim 16 and wherein the system resources comprise the number of communication channels allocated to the base station or base stations of a given service area; and/or the bandwidth of communication channels allocated to the base station or base stations.

18. A system according to claim 17 and wherein the processor is operable to transmit information about the one or more said other factors to the calling mobile station and the calling mobile station is operable to present the said information to its user.

19. A system according to any one of the preceding claims and wherein the system controller is operable to set up a group call between the mobile stations proposed to participate in the group according to the service area or areas selected by the processor or the service area or areas selected by the user of the calling mobile station after receipt of an instruction signal from the calling mobile station.

20. A system according to any one of the preceding claims and wherein the system comprises a digital wide area trunked network.

21. A system according to claim 20 and wherein the system is operable according to TETRA standard procedures.

22. A method of establishing a group call beteween mobile stations by use of a system according to any one of the preceding claims.

23. A mobile radio transceiver which is operable to carry out the functions of the calling mobile station in the system according to any one of claims 8 to 18.
